# EUROPÄISCHE PATENTANMELDUNG

(11) **EP 3 428 802 A1**
(43) Veröffentlichungstag der Anmeldung: **16.01.2019**
(21) Anmeldenummer: 17180481.8
(22) Anmeldetag: 10.07.2017
(51) Int. Cl.: G06F 12/0866, G06F 3/06

(54) **VERFAHREN ZUR OPTIMIERUNG MEHRERER ZUMINDEST IN BEZUG AUF EINE ZUGRIFFSZEIT UNTERSCHIEDLICHER DATENSPEICHER UND COMPUTERPROGRAMM MIT EINER IMPLEMENTATION DES VERFAHRENS**

(71) Anmelder: Siemens Aktiengesellschaft, 80333 München (DE)
(72) Erfinder: Selle, Sven, 90489 Nürnberg (DE)

(57) **Zusammenfassung**

Die Erfindung ist ein Verfahren zur Optimierung mehrerer zumindest in Bezug auf eine Zugriffszeit unterschiedlicher Datenspeicher (20, 22, 24), wobei in jedem Datenspeicher (20-24) Daten in einzelnen Speicherbereichen (40-47) abgelegt sind, wobei beim Zugriff auf einzelne Daten und/oder einen Speicherbereich (40-47) automatisch Zugriffsdaten, welche den jeweiligen Zugriff beschreiben, in eine Zugriffsprotokollierungsdatenbasis (50) geschrieben werden, wobei ein Zugriffsauswerter (52) die Zugriffsprotokollierungsdatenbasis (50) automatisch auswertet und wobei auf Basis von dessen Auswertung automatisch eine Optimierung der Datenspeicher (20-24) erfolgt oder ein Vorschlag zur Optimierung der Datenspeicher (20-24) generiert wird.

## Beschreibung

Die Erfindung betrifft ein automatisches Verfahren zur Optimierung mehrerer zumindest in Bezug auf eine Zugriffszeit unterschiedlicher Datenspeicher sowie im Weiteren ein Computerprogramm mit einer Implementation des Verfahrens.

Eine in Bezug auf eine jeweilige Zugriffszeit so weit wie möglich optimierte Benutzung unterschiedlicher Datenspeicher ist an sich bekannt. Bei sogenannten Personalcomputern ist die Verwendung eines als schneller Zwischenspeicher fungierenden Cache-Speichers bekannt. Auch Speichermedien, wie zum Beispiel Festplatten, weisen einen solchen Cache-Speicher auf.

Bei einer Erfassung von Daten im Zusammenhang mit einer IoT-Anwendung (Internet of Things) ist es zum Beispiel üblich, Daten (IoT-Daten) in Abhängigkeit von ihrem Alter in zunehmend langsamere Datenspeicher zu verlagern. Dies basiert auf der Annahme, dass aktuelle Daten häufig benutzt werden und daher so schnell wie möglich zur Verfügung stehen müssen, während historische Daten eher selten genutzt werden und daher auch eine längere Zugriffszeit tolerierbar ist.

Tatsächlich kann sich aber durchaus ergeben, dass auch historische Daten häufig benutzt werden müssen, während aktuelle Daten, zum Beispiel aufgrund einer eher geringen Bedeutung für einen gesteuerten und/oder überwachten technischen Prozess, ohne Weiteres in einem langsameren Datenspeicher abgelegt werden könnten. Die tatsächliche Planung der jeweiligen Speicherorte bleibt gegenwärtig dem Programmierer überlassen, der eine Anwendung (Applikation) zur Erfassung solcher Daten entwickelt. Eine zum Entwicklungszeitpunkt getroffene Einschätzung hinsichtlich der Relevanz der Daten und des daraus abgeleiteten Speicherorts kann sich später als falsch oder zumindest als nicht optimal herausstellen. Oftmals wird aber nach einer Inbetriebnahme einer oder mehrerer derartiger Applikationen nicht mehr geprüft, ob die ursprünglichen Annahmen gerechtfertigt sind. Selbst wenn eine solche Prüfung stattfindet, wäre im Falle eines dabei erkannten Optimierungspotenzials eine Änderung der oder jeder betroffenen Applikation auf der Ebene der jeweiligen Computerprogrammanweisungen notwendig.

Eine Aufgabe der Erfindung besteht entsprechend darin, ein Verfahren anzugeben, das Optimierungsmöglichkeiten in dieser Hinsicht automatisch erkennt und gegebenenfalls automatisch selbsttätig vornimmt.

Diese Aufgabe wird erfindungsgemäß mittels eines Verfahrens mit den Merkmalen des Anspruchs 1 gelöst. Dazu ist bei einem Verfahren zur Optimierung mehrerer zumindest in Bezug auf eine Zugriffszeit unterschiedlicher Datenspeicher, wobei in jedem Datenspeicher Daten, insbesondere IoT-Daten, in einzelnen Speicherbereichen abgelegt sind, Folgendes vorgesehen: Beim Zugriff auf einzelne Daten und/oder einen Speicherbereich werden automatisch Zugriffsdaten, welche den jeweiligen Zugriff beschreiben, in eine Zugriffsprotokollierungsdatenbasis geschrieben. Ein Computerprogramm - im Folgenden als Zugriffsauswerter bezeichnet - wertet diese automatisch aus. Auf Basis dieser Auswertung erfolgt automatisch - zum Beispiel durch den Zugriffsauswerter - eine Optimierung der Datenspeicher oder es wird ein Vorschlag zur Optimierung der Datenspeicher generiert. Ein solcher Vorschlag wird einem Benutzer präsentiert, welcher den Vorschlag annehmen oder ablehnen kann. Bei einer Annahme des Vorschlags erfolgt automatisch - zum Beispiel durch den Zugriffsauswerter - die Optimierung der Datenspeicher durch Umsetzung des jeweiligen Vorschlags.

Der Vorteil der Erfindung besteht darin, dass die Optimierung oder ein Vorschlag zur Optimierung von der tatsächlichen Nutzung der Daten abhängig ist. Die Optimierung oder die Optimierungsmöglichkeiten liefern also ein für ein jeweiliges Nutzungsszenario bestmögliches Ergebnis oder zumindest ein Ergebnis, das nahe am Optimum liegt. Die Optimierung oder die Erkennung von Optimierungsmöglichkeiten erfolgt automatisch und eliminiert so ansonsten mögliche Fehleinschätzungen eines Programmierers, der zum Beispiel aufgrund einer fehlerhaften Annahme einer häufigen Benutzung bestimmter Daten, welche tatsächlich später eher selten benötigt werden, deren Ablage in einem schnellen Datenspeicher vorsieht und damit wichtige Ressourcen im Grunde verschwendet.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Verfahrens erfolgt der Zugriff auf die Daten und/oder einen Speicherbereich in den Datenspeichern ausschließlich mittels von einer Programmierschnittstelle zur Verfügung gestellter Funktionen. Dies gewährleistet eine einfache Möglichkeit zur zentralen Erfassung der Zugriffe auf die Daten und/oder Speicherbereiche, indem die von der Programmierschnittstelle zur Verfügung gestellten Funktionen eine Ergänzung umfassen, die beim Aufruf der jeweiligen Funktion ein automatisches Schreiben von Zugriffsdaten der oben genannten Art in die Zugriffsprotokollierungsdatenbasis bewirkt.

Eine solche Ergänzung kann zum Beispiel darin bestehen, dass jede Funktion Programmcodeanweisungen zum Schreiben der Zugriffsdaten in die Zugriffsprotokollierungsdatenbasis selbst umfasst. Alternativ kann auch vorgesehen sein, dass jede Funktion Programmcodeanweisungen zum Aufruf einer Zugriffsprotokollierungsfunktion umfasst, wobei die Zugriffsprotokollierungsfunktion Programmcodeanweisungen zum Schreiben der Zugriffsdaten in die Zugriffsprotokollierungsdatenbasis umfasst. Die Verwendung einer Zugriffsprotokollierungsfunktion hat den Vorteil, dass die Programmcodeanweisungen zum Schreiben der Zugriffsdaten nur einmal benötigt werden. Diese Programmcodeanweisungen benötigen nur einmal Speicherplatz. Zudem können eventuelle Änderungen oder Ergänzungen zentral an der Zugriffsprotokollierungsfunktion durchgeführt werden und eine ansonsten notwendige, zeitaufwendige und fehleranfällige Änderung jeder einzelnen Funktion der Programmierschnittstelle wird vermieden.

Bei einer besonderen Ausführungsform des Verfahrens ist die Funktion der automatischen Optimierung der Datenspeicher und/oder die Funktion zur automatischen Generierung eines Vorschlags für eine Optimierung der Datenspeicher in Form eines eigenständigen, im Folgenden als Zugriffsoptimierer bezeichneten Computerprogramms implementiert. Der Zugriffsoptimierer ist durch den Zugriffsauswerter aufrufbar und wird während der Ausführung des Verfahrens zur Optimierung der Datenspeicher aufgerufen. Der Zugriffsoptimierer fungiert als Mittel zur automatischen Optimierung der Datenspeicher und/oder als Mittel zur automatischen Generierung eines Vorschlags zur Optimierung der Datenspeicher. Aufgrund eines Aufrufs durch den Zugriffsauswerter nimmt der Zugriffsoptimierer automatisch eine Optimierung der Datenspeicher vor oder schlägt eine Möglichkeit zur Optimierung der Datenspeicher vor.

Das hier vorgeschlagene und im Folgenden mit weiteren Details beschriebene Verfahren ist zur automatischen Ausführung in Form eines ggf. auch verteilten Computerprogramms realisiert, nämlich eines Computerprogramms zumindest mit der Funktionalität des Zugriffsauswerters und/oder eines Computerprogramms zumindest mit der Funktionalität des Zugriffsoptimierers und/oder eines Computerprogramms mit der kombinierten Funktionalität des Zugriffsauswerters und des Zugriffsoptimierers. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln. Die Erfindung ist schließlich auch ein Computer, in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Anwender des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Applikation zum Erfassen von IoT-Daten und zum Speichern der IoT-Daten in einem von mehreren Datenspeichern und
- FIG 2: eine Programmierschnittstelle als Schnittstelle zwischen einer Applikation gemäß FIG 1 und den zum Speichern der IoT-Daten benutzten Datenspeichern, wobei im Zuge des Speicherns der Daten in einem der Datenspeicher eine Protokollierung des Zugriffs auf die Datenspeicher in einer Zugriffsprotokollierungsdatenbasis stattfindet.

Das sogenannte Internet of Things (IoT) kann als ein Netzwerk von Gegenständen und/oder Vorrichtungen angesehen werden, welche in Form einer den Gegenständen oder Vorrichtungen zugeordneten Sensorik gewissermaßen eine integrierte Sensorik aufweisen, so dass eine Erfassung von Daten und ein Datenaustausch möglich sind. Zu den von einem solchen Netzwerk umfassten Gegenständen oder Vorrichtungen gehören zum Beispiel Maschinen, Anlagen, Anlagenteile und allgemein automatisierte technische Anlagen mit der davon umfassten Steuerungshardware sowie den jeweils gesteuerten und/oder überwachten Vorrichtungen sowie die diesen zugeordneten Aktoren und Sensoren.

Eine Vielzahl von Unternehmen entwickelt Lösungen und Anwendungen zur Verarbeitung und Verwendung von in einem solchen Rahmen entstehenden Daten (IoT-Daten). Auch solche Anwendungen sind optional untereinander wieder vernetzt, zum Beispiel in der Form, dass eine Anwendung zum Beispiel Daten benutzt, die auch von einer anderen Anwendung benutzt werden, und/oder dass eine Anwendung zur Verarbeitung von Daten eine Funktion nutzt, die auch von einer anderen Anwendung benutzt wird. Insgesamt entsteht damit eine in der Fachterminologie mitunter auch als "Ecosystem" bezeichnete Plattform (IoT-Plattform) zum Zugriff auf und zur Verwendung von IoT-Daten.

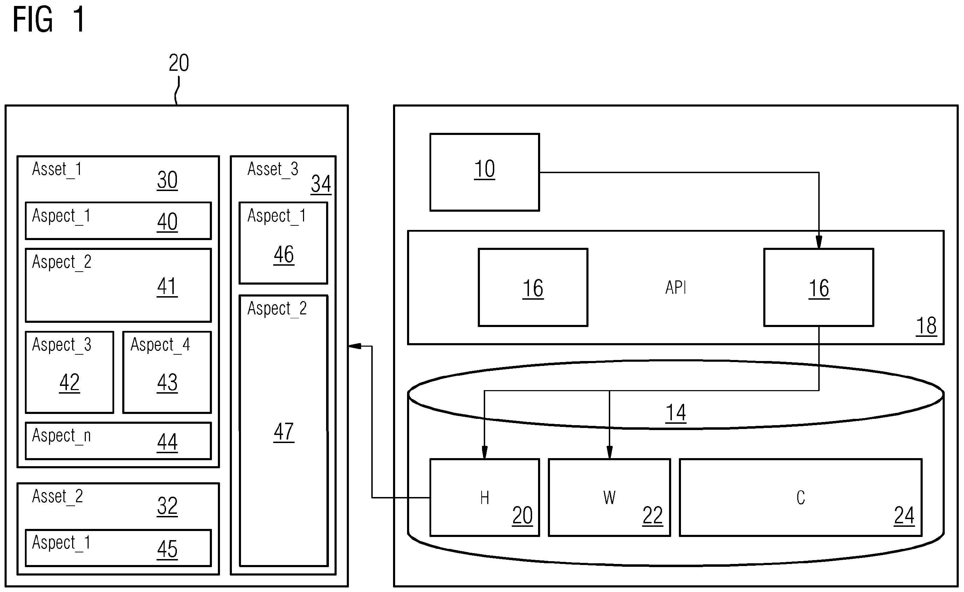

Die Darstellung in FIG 1 zeigt schematisch vereinfacht eine Applikation (Anwendung) 10 zum Zugriff auf im Folgenden kurz als Daten bezeichnete IoT-Daten. Die Daten sind in einem Datenpool 14, gegebenenfalls auch einem verteilten Datenpool 14, insbesondere einem Datenpool 14 in der sogenannten Cloud, gespeichert. Der Zugriff auf die Daten erfolgt mittels einer von grundsätzlich mehreren Funktionen 16, die im Rahmen einer Programmierschnittstelle 18, zum Beispiel einer Representational State Transfer API (ReST API), zur Verfügung stehen.

Der Datenpool 14 umfasst unterschiedliche Datenspeicher 20, 22, 24, nämlich zumindest einen ersten Datenspeicher 20, einen zweiten Datenspeicher 22 und einen dritten Datenspeicher 24, bei denen es sich jeweils auch um verteilte Datenspeicher 20-24 handeln kann. Die Datenspeicher 20-24 sind in der Darstellung in FIG 1 symbolisch mit "H", "W" und "C" bezeichnet. Diese symbolische Bezeichnung steht für "hot", "warm" und "cold". Damit wird ausgedrückt, dass der erste Datenspeicher 20 einen besonders schnellen Zugriff erlaubt, sich also durch eine sehr geringe Zugriffszeit auszeichnet, und dass in diesem üblicherweise besonders aktuelle Daten gespeichert sind. Der zweite Datenspeicher 22 erlaubt einen im Vergleich dazu weniger schnellen Zugriff (mittlere Zugriffszeit), aber immer noch einen schnellen Zugriff und in diesem sind üblicherweise im Vergleich weniger aktuelle Daten gespeichert. Der dritte Datenspeicher 24 erlaubt nur noch einen vergleichsweise langsamen Zugriff (vergleichsweise hohe Zugriffszeit) und in diesem sind typischerweise ältere, historische Daten gespeichert.

Eine mögliche Strukturierung des Inhalts des ersten Datenspeichers 20 ist in FIG 1 auf der linken Seite gezeigt. Danach sind in dem ersten Datenspeicher 20 mehrere jeweils mit "Asset" ("Asset_1", "Asset_2", "Asset_3") bezeichnete Speicherbereiche 30, 32, 34 gebildet, welche wiederum einzelne mit "Aspect" (zum Beispiel "Aspect_1", "Aspect_2" etc.) bezeichnete weitere Speicherbereiche 40, 41, 42, 43, 44, 45, 46, 47 umfassen. Die vorgenannten Speicherbereiche 30-34; 40-47 werden zur Unterscheidung als Assetspeicherbereiche 30-34 bzw. Aspektspeicherbereiche 40-47 bezeichnet. Eine solche Organisation erlaubt eine sinnvolle Gruppierung der Daten und bildet die eingangs genannten Maschinen, Einheiten usw., bei denen oder an denen die Daten entstehen, ab. Jede derartige Maschine oder Einheit ist ein "Asset" und mittels der Gruppierung der dort entstehenden Daten sind diese zusammengefasst. Der Begriff "Asset" wird entsprechend im Folgenden als Synonym für Begriffe wie "Anlage", "Anlagenteil", "Automatisierungssystem", "Automatisierungsgerät" etc. und allgemein als Gattungsbegriff für solche und ähnliche Vorrichtungen verwendet. Ein "Aspect" einer Maschine oder Einheit charakterisiert eine Datenart oder eine sonstige Möglichkeit zur weiteren Charakterisierung aller Daten eines Assets. Ein Beispiel für einen "Aspect" (oder Aspekt) in diesem Sinne sind Temperaturdaten. Wenn also zum Beispiel einer Maschine (Asset) eine Mehrzahl von Temperatursensoren zugeordnet ist, gehören die resultierenden Daten zum selben Aspekt der Maschine.

Die eigentlichen Daten (IoT-Daten) gehören demnach zu jeweils einem Aspekt eines Assets oder ggf. - zum Beispiel wenn ein Asset nur einen Aspekt umfassen würde - zum Asset selbst. Jede im Folgenden erfolgende Bezugnahme auf einen Aspekt oder einen Aspektspeicherbereich 40-47 oder ein Asset oder einen Assetspeicherbereich 30-34 ist demnach auch als Bezugnahme auf die davon umfassten Daten oder zumindest ein davon umfasstes Datum zu lesen.

Die vorstehenden Erläuterungen gelten entsprechend auch für eine mögliche Strukturierung der Inhalte des zweiten Datenspeichers 22 und des dritten Datenspeichers 24.

Die Anzahl der Assets in den Datenspeichern 20-24 entspricht der Anzahl der jeweils überwachten Maschinen und/oder Einheiten. Die Anzahl der jeweiligen Aspekte ergibt sich aufgrund einer Strukturierung / Kategorisierung der jeweils erhältlichen Daten. Eine zumindest anfängliche Zuordnung eines Assets und/oder eines Aspekts eines Assets zu einem der Datenspeicher 20-24 ergibt sich zum Beispiel aufgrund von Benutzervorgaben.

Der hier vorgestellte Ansatz zielt darauf ab, die Zuordnung automatisch und dynamisch mit dem Ziel einer optimalen Verfügbarkeit der Daten anzupassen. Häufig benutzte Daten sollen möglichst in dem (besonders schnellen) ersten Datenspeicher 20 vorgehalten werden und selten benutzte Daten, sogar aktuelle Daten, die nur selten benutzt werden, können zum Beispiel in den (eher langsamen) dritten Datenspeicher 24 verlagert werden.

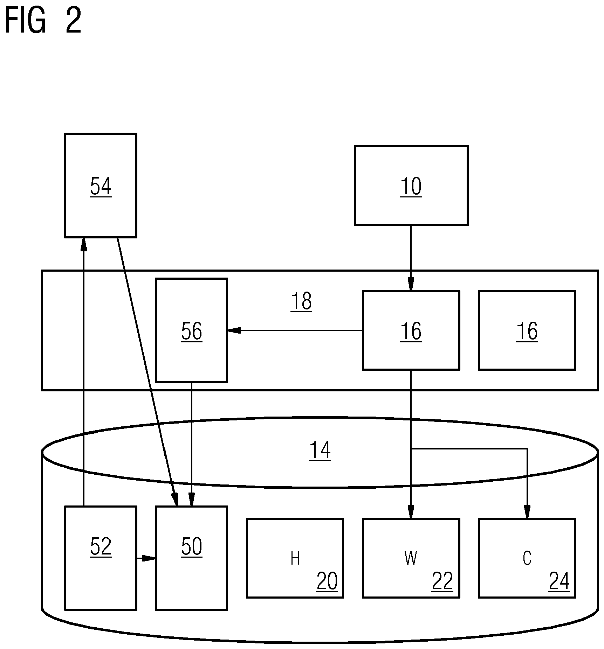

Die Darstellung in FIG 2 zeigt zur Erläuterung des Ansatzes im Zentrum die Programmierschnittstelle 18 und einzelne davon umfasste Funktionen 16. Die Anzahl der gezeigten Funktionen 16 ist hier im Interesse der Übersicht auf zwei Funktionen 16 begrenzt. Üblicherweise wird mittels einer zum Zugriff auf IoT-Daten bestimmten Programmierschnittstelle 18 eine Vielzahl von Funktionen 16 bereitgestellt. Wesentlich ist, dass eine Applikation 10 nicht direkt auf die Daten in einem der Datenspeicher 20-24 zugreift, sondern dass dies immer über eine Funktion 16 der Programmierschnittstelle 18 erfolgt. Aufgrund dieser Art des Zugriffs ist eine Protokollierung möglich und gemäß dem hier vorgeschlagenen Ansatz vorgesehen.

Die Protokollierung erfolgt in einer gegebenenfalls verteilten, im Folgenden mitunter kurz als Zugriffsdatenbasis 50 bezeichneten Zugriffsprotokollierungsdatenbasis 50. Jede Funktion 16 der Programmierschnittstelle 18 ist dafür eingerichtet, bei einem Zugriff auf den Datenpool 14 Daten, welche den jeweiligen Zugriff charakterisieren, in die Zugriffsdatenbasis 50 zu schreiben. Zur Begrenzung der im Zuge der Protokollierung entstehenden zusätzlichen Datenmenge ist vorgesehen, dass diese Daten nicht mit Bezug auf jedes einzelne Datum aus dem Datenpool 14 und den dortigen Datenspeichern 20-24 erzeugt werden, sondern dass stattdessen eine Protokollierung mit Bezug auf jeden Aspektspeicherbereich 40-47 eines Assetspeicherbereichs 30-34 erfolgt.

In der Zugriffsdatenbasis 50 wird dazu zunächst eine Struktur angelegt, welche eine Zuordnung solcher Zugriffsdaten zu jedem Aspektspeicherbereich 40-47 eines Assetspeicherbereichs 30-34 erlaubt. Eine mögliche Struktur ist nachfolgend angegeben:
erster Assetspeicherbereich 30
   erster Aspektspeicherbereich 40
   des ersten Assetspeicherbereichs 30 Zugriffsdaten
      des ersten Aspektspeicherbereichs 40
      des ersten Assetspeicherbereichs 30 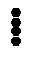

   letzter Aspektspeicherbereich 44
   des ersten Assetspeicherbereichs 30 Zugriffsdaten des ...
zweiter Assetspeicherbereich 32
   erster Aspektspeicherbereich 45
   des zweiten Assetspeicherbereichs 32 Zugriffsdaten des ... 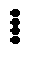

   letzter Aspektspeicherbereich
   des zweiten Assetspeicherbereichs 32 Zugriffsdaten des ... 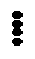

letzter Assetspeicherbereich 34
   erster Aspektspeicherbereich 46
   des letzten Assetspeicherbereichs 34 Zugriffsdaten des ... 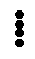

   letzter Aspektspeicherbereich
   des letzten Assetspeicherbereichs 34 Zugriffsdaten des ...

Der Platzhalter "..." steht für einen Text, der den jeweiligen Aspektspeicherbereich und Assetspeicherbereich nennt, zu dem die Zugriffsdaten gehören, so dass zum Beispiel der Text mit dem ersten Platzhalter ausgeschrieben lautet: "Zugriffsdaten des letzten Aspektspeicherbereichs des ersten Assetspeicherbereichs". Für die anderen Platzhalter "..." gilt dies entsprechend.

Die Zugriffsdaten umfassen zum Beispiel für jeden Zugriff auf den jeweiligen Aspektspeicherbereich 40-47 einen Datensatz mit der folgenden Struktur:
UserID
Zeitstempel
verwendete Funktion 16

Optional kann ein solcher Datensatz auch noch Informationen bezüglich der Parameter der jeweils verwendeten Funktion 16 umfassen, zum Beispiel Parameter, die einen Zeitabschnitt einer in Form einer Zeitreihe abgelegter IoT-Daten bestimmen. Auf diese Weise lässt sich zum Beispiel herausfinden, dass Daten für eine Klimaanlage oder dergleichen (ein weiteres Beispiel für eine Maschine oder Einheit der eingangs genannten Art) in den Sommermonaten häufiger abgefragt werden.

Die Zugriffsdaten werden bei jedem Zugriff auf den Datenpool 14 mittels einer der Funktionen 16 in die Zugriffsdatenbasis 50 geschrieben. So entsteht in Form der Zugriffsdatenbasis 50 mit der Zeit eine hinsichtlich des tatsächlich stattfindenden Zugriffs auf einzelne Aspektspeicherbereiche 40-47 aussagekräftige Informationssammlung. Eine Auswertung der Zugriffsdatenbasis 50 und der davon umfassten Zugriffsdaten erlaubt zum Beispiel eine automatische Erkennung derjenigen Aspektspeicherbereiche 40-47, auf die besonders häufig zugegriffen wird, und genauso eine automatische Erkennung derjenigen Aspektspeicherbereiche 40-47, auf die eher selten zugegriffen wird.

Eine solche automatische Auswertung der Zugriffsdatenbasis 50 erfolgt mittels einer im Folgenden als Zugriffsauswerter 52 bezeichneten Softwarefunktion. Diese ist zum Beispiel als Teil der Programmierschnittstelle 18 implementiert. Der Zugriffsauswerter 52 erkennt zum Beispiel, dass auf bestimmte Aspektspeicherbereiche 40-47 immer gleichzeitig oder in engem zeitlichen Zusammenhang zugegriffen wird. Dann kann der Zugriffsauswerter 52 zum Beispiel eine Zusammenfassung solcher Aspektspeicherbereiche 40-47 vorschlagen oder unmittelbar automatisch vornehmen. Genauso oder zusätzlich kann der Zugriffsauswerter 52 zum Beispiel automatisch erkennen, dass auf einen zum Beispiel im zweiten Datenspeicher 22 oder im dritten Datenspeicher 24 abgelegten Aspektspeicherbereich 40-47 ein besonders häufiger Zugriff erfolgt. Dann kann der Zugriffsauswerter 52 zum Beispiel eine Verlagerung des betreffenden Aspektspeicherbereichs 40-47 in einen schnelleren Speicherbereich, also zum Beispiel in den ersten Datenspeicher 20 bzw. in den zweiten Datenspeicher 22 vorschlagen oder unmittelbar automatisch vornehmen. Ein häufiger Zugriff ist dabei eine Anzahl von Zugriffen während eines vorgegebenen oder vorgebbaren Zeitintervalls, die einen vorgegebenen oder vorgebbaren Schwellwert überschreitet. Der Zugriffsauswerter 52 überwacht demnach zur Erkennung besonders häufiger Zugriffe die Anzahl der Zugriffe, das jeweilige Zeitintervall und den Schwellwert.

Eine solche oder ähnliche Optimierung, also zum Beispiel eine Zusammenfassung oder Verlagerung einzelner Aspektspeicherbereiche 40-47, kann optional mittels einer im Folgenden als Zugriffsoptimierer 54 bezeichneten Softwarefunktion vorgeschlagen werden oder automatisch erfolgen. Der Zugriffsoptimierer 54 wird dafür vom Zugriffsauswerter 52 angesteuert. Der Zugriffsoptimierer 54 kann auch Teil des Zugriffsauswerters 52 sein oder Zugriffsoptimierer 54 und Zugriffsauswerter 52 können auch zusammen als verteilter Zugriffsauswerter 52 aufgefasst werden.

Das Schreiben der Zugriffsdaten in die Zugriffsdatenbasis 50 kann erfolgen, indem jede Funktion 16 der Programmierschnittstelle 18 entsprechende Computerprogrammanweisungen selbst umfasst. Alternativ kann dieses Schreiben der Zugriffsdaten in die Zugriffsdatenbasis 50 auch erfolgen, indem jede Funktion 16 eine Zugriffsprotokollierungsfunktion 56 aufruft, welche das Schreiben der Zugriffsdaten in die Zugriffsdatenbasis 50 bewirkt. Der Aufruf der Zugriffsprotokollierungsfunktion 56 durch die jeweilige Funktion 16 erfolgt dabei in einer Art und Weise, dass der Zugriffsprotokollierungsfunktion 56 von der aufrufenden Funktion 16 die jeweils in die Zugriffsdatenbasis 50 zu schreibenden Zugriffsdaten als Parameter übergeben werden. Dann ist eine Mehrzahl gleicher oder gleichartiger Computerprogrammanweisungen (als Bestandteil jeder Funktion 16) nicht notwendig und jede Funktion 16 umfasst lediglich eine Computerprogrammanweisung zum Aufruf der Zugriffsprotokollierungsfunktion 56.

Der Zugriffsauswerter 52 kann zum Beispiel zyklisch als eigenes Computerprogramm ausgeführt werden oder bei jedem Aufruf der Zugriffsprotokollierungsfunktion 56 oder bei jedem n-ten Aufruf der Zugriffsprotokollierungsfunktion 56 aufgerufen werden, wobei n eine vorgegebene oder vorgebbare ganze Zahl ist.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren und ein Computerprogramm mit einer Implementation des Verfahrens, wobei das Verfahren zur Optimierung mehrerer zumindest in Bezug auf eine Zugriffszeit unterschiedlicher Datenspeicher 20, 22, 24 vorgesehen ist, wobei in jedem Datenspeicher 20-24 Daten in einzelnen Speicherbereichen 40-47 abgelegt sind, wobei beim Zugriff auf einzelne Daten und/oder einen Speicherbereich 40-47 automatisch Zugriffsdaten, welche den jeweiligen Zugriff beschreiben, in eine Zugriffsprotokollierungsdatenbasis 50 geschrieben werden, wobei ein Zugriffsauswerter 52 die Zugriffsprotokollierungsdatenbasis 50 automatisch auswertet und wobei auf Basis von dessen Auswertung automatisch eine Optimierung der Datenspeicher 20-24 erfolgt oder ein Vorschlag zur Optimierung der Datenspeicher 20-24 generiert wird.

## Patentansprüche

1. Verfahren zur Optimierung mehrerer zumindest in Bezug auf eine Zugriffszeit unterschiedlicher Datenspeicher (20, 22, 24),
wobei in jedem Datenspeicher (20-24) Daten in einzelnen Speicherbereichen (40-47) abgelegt sind,
wobei beim Zugriff auf einzelne Daten und/oder einen Speicherbereich (40-47) automatisch Zugriffsdaten, welche den jeweiligen Zugriff beschreiben, in eine Zugriffsprotokollierungsdatenbasis (50) geschrieben werden,
wobei ein Zugriffsauswerter (52) die Zugriffsprotokollierungsdatenbasis (50) automatisch auswertet und
wobei auf Basis von dessen Auswertung automatisch eine Optimierung der Datenspeicher (20-24) erfolgt oder ein Vorschlag zur Optimierung der Datenspeicher (20-24) generiert wird.

2. Verfahren nach Anspruch 1, wobei der Zugriff auf die Daten und/oder einen Speicherbereich (40-47) in den Datenspeichern (20-24) ausschließlich mittels von einer Programmierschnittstelle (18) zur Verfügung gestellter Funktionen (16) erfolgt.

3. Verfahren nach Anspruch 2, wobei jede Funktion (16) Programmcodeanweisungen zum Schreiben der Zugriffsdaten in die Zugriffsprotokollierungsdatenbasis (50) umfasst.

4. Verfahren nach Anspruch 2, wobei jede Funktion (16) Programmcodeanweisungen zum Aufruf einer Zugriffsprotokollierungsfunktion (56) umfasst, wobei die Zugriffsprotokollierungsfunktion (56) Programmcodeanweisungen zum Schreiben der Zugriffsdaten in die Zugriffsprotokollierungsdatenbasis (50) umfasst.

5. Verfahren nach einem der vorangehenden Ansprüche, wobei ein mittels des Zugriffsauswerters (52) aufrufbarer Zugriffsoptimierer (54) automatisch eine Optimierung der Datenspeicher (20-24) vornimmt oder vorschlägt.

6. Computerprogramm mit Programmcodemitteln, um alle Schritte von jedem beliebigen der Ansprüche 1 bis 5 durchzuführen, wenn das Computerprogramm auf einem Computer ausgeführt wird.
